# EUROPEAN PATENT SPECIFICATION

(11) **EP 1 332 668 B1**
(45) Date of publication and mention of the grant of the patent: **11.05.2011**
(21) Application number: 03075041.8
(22) Date of filing: 08.01.2003
(51) Int. Cl.: A01J 5/007

(54) **A method of and a device for performing an animal related action on an animal**
Vorrichtung und Vefahren für eine tierbezogene Handlung
Dispositif et procédé servant à exercer une action relative à un animal

(30) Priority: 05.02.2002 EP 02075477
(43) Date of publication of application: 06.08.2003
(73) Proprietor: Lely Enterprises AG, 6300 Zug (CH)
(72) Inventor: van der Lely, Alexander, 3065 NA Rotterdam (NL); Theelen, Antoon Peter André, 3142 CM Maassluis (NL)
(74) Representative: Corten, Maurice Jean F.M.

(56) References cited:
- EP-A- 0 657 098
- WO-A-01/37646
- WO-A-98/47351
- US-A- 4 532 892

## Description

The present invention relates to a method of performing an animal related action on a living animal according the preamble of claim 1.

Furthermore, the invention refers to a device for performing an animal related action on a living animal according the preamble of claim 13.

Such a method and device are known from WO 01/37646. Herein at least one of said parameters of a milking process is adjusted in connection with a value determined on the basis of the time period from at least one first milking operation to a following second milking operation. Although such a method and device in some instances work satisfactorily improvement is possible.

US4532892 describes an animal feeding and monitoring system including an electronic identity tag for identifying individual cows. Feed consumption and milk production are obtained and stored enabling a computer to determine the feeding requirements for the identified animal. A central computer directs the delivery of feed to the identified animal in accordance with the animal's feeding requirements.

In WO9847351 an animal husbandry system is described with an electronic identification device carried by the animal. The system is able to measure a specific physical characteristic like weight, rumen pH and temperature of a particular animal. A computer is used for correlating the identification signal and the weight signal for selective separation of the animal from other animals. According to the invention this is achieved by a method of performing an animal related action on a living animal of the above mentioned art characterized in that the animal related variable is defined by the degree of filing of the udder of said animal.

According to the invention this is furthermore achieved by a device for performing an animal related action on a living animal of the above mentioned art characterized in that the determining means are adapted for determining the degree of filling of the udder said animal.

By the expression "nature of the process" is meant the characteristic performance of the process in a broad sense. In case the animal related action is milking of the animal, the nature can be defined by a number of parameters including the time period of the milking process, the time period and/or the intensity of the preceding stimulation cleaning of the teats, other possible pretreatments of the teats such as cleaning, the milking vacuum level, the upper and lower levels of the pulsation pressure in the pulsation chamber, the pulsation frequency, the pulsation ratio, etc. With milking nature also the aggressiveness or intensity of the performance of the milking process is meant.

The invention is based on the insight that since each animal has its own biological clock the adjustment of at least one of the parameters based on a time period defined by a (mechanical) clock can lead to problems. Thus according to the invention it is not the time period which is used to adjust a parameter of a process, but an animal related variable which is not defined by a (mechanical) clock. Not only can the animal related variable be a variable pertaining to the same animal but in addition it has appeared that an improvement can be obtained even if the variable pertains to one or more other (thus a group of) animals. In this way the adjustment of the parameters can be done in a more animal friendly way.

In a preferred embodiment the value of the variable related to one or more animals is determined from at least one first previous animal related action to the current animal related action, which previous action may be the immediately preceding animal related action. According to a preferred embodiment of the invention, the adjustment of at least one of said parameters is such that the current animal related action is performed in a less intensive manner when the animal related variable has a relative small value and in a more intensive manner when the animal related variable has a relative large value. The advantage of such a performance of the current animal related action is in the case of a milking process that a more gentle treatment of the teats is achieved, which reduces the risks of injuries on the teats and which may result in a higher milk yield.

According to a further embodiment of the invention, the adjustment is performed in an automatic manner. Moreover, the determining of said value may also be performed in an automatic manner. It is considered that the method according to the present invention is suitable for being performed in such an automatic manner, by utilising a database storing facts and parameters about the individual animals and offering the possibility to store the value of said variable, and by utilising control means for the adjustment of different machine parameters. In addition in case of a milking process time points for different measures, such as terminating the stimulation period or initiating removal of the teat cups can be stored. Consequently, said adjustable parameters may include at least one of the milking vacuum level, the pulsation frequency, the duration of the preceding teat stimulation, the pulsation ratio, and the point of time for the removal of the teat cups.

According to a further embodiment of the invention, the adjustment of the milking vacuum level is such that the milking vacuum level during the current milking operation is relatively low when the animal related variable has a relative small value and relatively high when the animal related variable has a relative large value. Consequently, the milking intensity may be reduced by reducing the milking vacuum level (i.e. a relatively high pressure) during the current milking operation when the animal related variable has a relative small value and by increasing the milking vacuum level (i.e. a relatively low pressure) when the animal related variable has a relative large value.

According to a further embodiment of the invention, the adjustment of the pulsation frequency is such that the pulsation frequency during the current milking operation is relatively low when the animal related variable has a relative small value and relatively high when the animal related variable has a relative large value. Consequently, a high milking intensity is obtained by a high pulsation frequency and a low milking intensity is obtained by a low pulsation frequency.

According to a further embodiment of the invention, the adjustment of the preceding teat stimulation is such that the stimulation period during the current milking operation is relatively long when the animal related variable has a relative small value and relatively short when the animal related variable has a relative large value. When the animal related variable, for example between subsequent milking operations, has a relative small value, a longer stimulation period results to obtain milk let down.

According to a further embodiment of the invention, the adjustment of the pulsation ratio is such that the pulsation ratio during the current milking operation is relatively low when the animal related variable has a relative small value and relatively high when the animal related variable has a relative large value. Consequently, a low milking intensity is obtained by a low pulsation ratio and a high milking intensity is obtained by a relatively high pulsation ratio.

According to a further embodiment of the invention, the adjustment of the time period for the removal of the teat cups is such that the teat cups are removed at a relatively early point of time when the animal related variable has a relative small value and at a relatively late point of time when the animal related variable has a relative large value.

According to a further embodiment of the invention, the first previous animal related action is the animal related action immediately preceding the current animal related action. Consequently, the value of the animal related variable is based on the time period calculated from the immediately preceding animal related action, and thus different values can be obtained although the time period is the same.

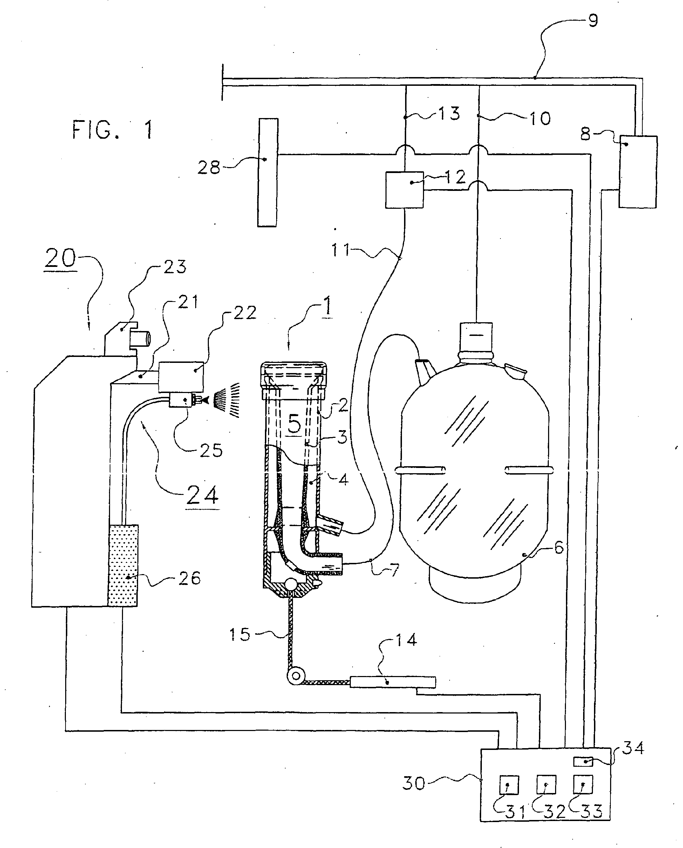

The present invention is now to be disclosed more closely by means of the description of an embodiment and with reference to the drawing attached, in which
Figure 1 discloses schematically a device for milking an animal according to the present invention.

Figure 1 discloses schematically a milking device for milking an animal as an example for a machine for performing an animal related action. The milking device comprises a number of teat cups 1. The device referred to in this embodiment is adapted for milking of cows and therefore includes four teat cups 1, although only one teat cup 1 is disclosed in Figure 1. Milking devices for other animals such as goats or buffaloes may include only two teat cups 1. The teat cup includes a shell 2 and a teat cup liner 3. A pulsation chamber 4 is formed between the shell 2 and the teat cup liner 3. The teat cup liner 3 encloses an inner space 5 adapted to receive a teat of the animal to be milked. The inner space 5 is connected to a milk-receiving member 6 via a milk conduit 7. The milk is conveyed from the teat to the milk-receiving member 6 by means of a milking vacuum produced by a vacuum pump 8 and transferred to the milk conduit 7 via a main vacuum conduit 9 and a milk vacuum conduit 10.

The pulsation chamber 4 is subjected to a pulsating pressure via a pulse conduit 11 and a pulsator 12 driven by a vacuum supplied to the pulsator from the vacuum pump 8 via the main vacuum conduit 9 and a pulse vacuum conduit 13. Due to the pulsating pressure, the teat cup liner 3 will move in cyclically, alternating movement between a closed position with regard to the inner space 5 and an open position with regard to the inner space. The ratio of the time that the teat cup liner 3 is more than half open to the time it is less than half open is defined as the pulsation ratio.

Furthermore, the device comprises a remover member 14 for the removal of the teat cups 1 from the teat of the animal. The remover member 14 comprises a pulling cylinder acting on a flexible cord 15 connected to the teat cup 1.

The milking device is arranged to permit automatic attachment of the teat cups 1 to the teats of the animal. Thereby, the milking device comprises an automatic handling equipment 20 including a robot arm 21 having a gripping member 22 arranged to grip the teat cup 1 from a teat cup magazine (not disclosed) and move the teat cup 1 towards the teat of the animal to be milked and thereafter attach the teat cup 1 to the teat. A video camera 23 or any similar teat identification member is mounted on the robot arm 21 in order to detect and sense the position of the teat.

Moreover, the milking device includes a spraying member 24, comprising a nozzle 25 mounted to the robot arm 21 and arranged to direct a jet of liquid towards the teat in order to clean the teat and thereby stimulate the teat. The nozzle 25 is connected to a liquid source 26 schematically disclosed. It is to be noted that the spraying member 24 disclosed in this embodiment merely is an example of a device for stimulating the teat to the milk let down. It is to be understood that the invention may incorporate other stimulating means, for example stimulating by means of the teat cup 1 attached to the teat, wherein the teat cup liner and the teat is subjected to a pulsation at a relatively high frequency, or a mechanical stimulating member.

Furthermore, the milking device includes an animal identification member 28, which is provided adjacent to the position at which the animal is milked. The animal identification member 28 is arranged to identify the animal to be milked, for instance by means of a transponder carried by the animal.

Different components of the milking device are controlled by a control unit 30. These components include a vacuum pump 8, the pulsator 12, the remover member 14, the automatic handling equipment 20, the spraying member 24, and the identification member 28. Although only one control unit 30 is disclosed in this embodiment, it is to be noted that the milking device may include several control units, for instance separate control units for the different components. The control unit 30 includes a processing member 31, a time-measuring member 32 and a storing member 33. By means of the time-measuring member 32, the point of time for different events may be detected. Such events include for instance the application of the teat cup 1 to a teat, the removal of the teat cup 1 from the teat, the beginning of the milk flow to the milk-receiving member 6 via the milk conduit 7, the end of the milk flow, beginning of the stimulation of a teat by means of the spraying member 24, the end of the stimulation period etc. The different points of time are stored in the storing member 33. In addition an animal related variable-measuring member 34 is present which measures an animal related variable, which may be processed by the processing member 31 in order to determine the animal related variable, for example between two subsequent milking operations.

By means of the control unit 30, different parameters defining the nature and/or intensity of the milking process and related to the different components such as the vacuum pump 8, the pulsator 12, the remover member 14, the automatic handling equipment 20 and the spraying member 24, may be adjusted.

In accordance with the present invention, these parameters may be adjusted in response to the animal related variable, e.g. determined between two subsequent milking operations, defined by the animal related variable-measuring member 34.

For example, the point of time of the removal of the teat cup 1 after a first milking operation of a cow identified by the identification member 28 may be detected by the time-measuring member 32 and stored in the storing member 33. When the cow in question arrives in the milking stall once again for the subsequent second milking operation, she is identified by the identification member 28 and the point of time of the application of the teat cup 1 to the teat, for instance, may be detected by the time-measuring member 32. By means of these two detected points of time the animal related variable-measuring member 34 may determine the animal related variable between the two subsequent milking operations, i.e. in the time-period measured. Thereafter, the intensity of the subsequent second milking operation (i.e. the current milking operation to be performed on the animal) may be controlled by adjusting one or several of said parameters in response to the value of said animal related variable. The adjustment of said parameters could for example be such that the second milking operation is performed in a less intensive manner when the animal related variable has a relative small value and in a more intensive manner when the animal related variable has a relative large value.

The parameters defined above may be adjusted in a number of different ways in order to control the milking nature and/or intensity. For instance, the vacuum pump 8 may be controlled in order to increase or decrease the milking vacuum level acting on the teat to extract milk from the udder of the animal. A relatively high milking vacuum level corresponds to a relatively high milking intensity and a relatively lower milking vacuum level corresponds to a lower milking intensity.

Furthermore, the control unit 30 may be arranged to control the pulsator 12 in order to adjust the pulsation frequency, wherein a high frequency corresponds to a high milking intensity and a lower pulsation frequency corresponds to a lower milking intensity. The control unit 30 may also be arranged to control the pulsator 12 in such a manner that the pulsation ratio is adjusted, wherein a higher pulsation ratio, i.e. a relatively long open phase of the teat cup liner 3, corresponds to a high milking intensity and a lower pulsation ratio corresponds to a lower milking intensity.

Furthermore, the control unit 30 may be arranged to control the remover member 14, and more exactly the point of time for the removal of the teat cup 1 from the teat. In case of a relatively low milking intensity, the teat cup 1 may be removed at an earlier point of time than in case of a higher milking intensity.

The milking intensity may also be controlled by adjusting the time period or the efficiency of the stimulation of the teat prior to the current milking. A more efficient stimulation corresponds to a higher milking intensity than a less efficient stimulation. Moreover, the milking intensity may be raised by increasing the time period for the stimulation.

It is to be noted that the milking intensity may be controlled by other parameters than the parameters mentioned above. The parameters mentioned in the application are to be regarded as examples. It is also to be noted that the milking nature and/or intensity may be controlled by adjusting not only one but a combination of different parameters. The milking intensity may not only be controlled with respect to the animal related variable between two subsequent milking operations, but also with respect to, for instance, an average animal related variable.

In practice it has appeared that a more than satisfactory functioning of the device can be obtained when the animal related variable is defined by the number of other animals that have been subjected to the animal related action. In this case the animal related variable-measuring member 34 can be a counter, counting the number of animals on which the animal related action has been performed.

## Claims

1. A method of performing an animal related action on a living animal, said animal related action being determined by a number of adjustable parameters defining the nature of the animal related action, wherein the animal related action is milking by means of a milking machine according to a milking process being determined by a number of adjustable parameters defining the nature of the milking process, wherein the animal related action yields milk or milk fat or milk protein or the like, the method comprising the steps of:
determining for said animal a value of a variable related to one or more animals;
adjusting in connection with a current animal related action on said animal at least one of said parameters in response to said determined value; and
performing the current animal related action, **characterized in that** the animal related variable is defined by the degree of filling of the udder of said animal.

2. A method according to claim 1, wherein the value of a variable related to one or more animals is determined from at least one first previous animal related action to the current animal related action.

3. A method according to any one of the preceding claims, wherein the adjustment of at least one of said parameters is such that the current animal related action is performed in a less intensive manner when the animal related variable has a relative small value and in a more intensive manner when the animal related variable has a relative large value.

4. A method according to any one of the preceding claims, wherein the adjustment is performed in an automatic manner.

5. A method according to any one of the preceding claims, wherein the determining of said value is performed in an automatic manner.

6. A method according to claim 3, wherein said adjustable parameters include at least one of the milking vacuum level, the pulsation frequency, the duration and/or intensity of the preceding teat stimulation, the duration and/or intensity of the teat cleaning, the pulsation ratio, and the point of time for the removal of the teat cups.

7. A method according to claim 6, wherein the adjustment of the milking vacuum level is such that the milking vacuum level during the current milking operation is relatively low when the animal related variable has a relative small value and relatively high when the animal related variable has a relative large value.

8. A method according to claim 6, wherein the adjustment of the pulsation frequency is such that the pulsation frequency during the current milking operation is relatively low when the animal related variable has a relative small value and relatively high when the animal related variable has a relatively large value.

9. A method according to claim 6, wherein the adjustment of the preceding teat stimulation is such that the stimulation period during the current milking operation is relatively long when the animal related variable has a relative small value and relatively short when the animal related variable has a relative large value.

10. A method according to claim 6, wherein the adjustment of the pulsation ratio is such that the pulsation ratio during the current milking operation is relatively low when the animal related variable has a relative small value and relatively high when the animal related variable has a relatively large value.

11. A method according to claim 6, wherein the adjustment of the time period for the removal of the teat cups is such that the teat cups are removed at a relatively early point of time when the animal related variable has a relative small value and at a relatively late point of time when the animal related variable has a relative large value.

12. A method according to any one of the preceding claims, wherein the first previous animal related action is the animal related action immediately preceding the current animal related action.

13. A device for performing an animal related action on a living animal, comprising:
a machine arranged to perform the animal related action on said animal according to a process being determined by a number of adjustable parameters defining the nature of the process, wherein the machine for performing an animal related action is a milking machine for milking an animal, comprising:
a milking machine arranged to permit milking of the animal according to a milking process being determined by a number of adjustable parameters defining the nature of the milking process, said device comprising:
determining means (31, 32, 34) for determining for said animal a value of a variable related to one or more animals, and
control means (30, 31) arranged to adjust at least one of said parameters of the machine in connection with a current animal related action in response to said determined value, **characterized in that** the determining means (31, 32, 34) are adapted for determining the degree of filling of the udder of said animal.

14. A device according to claim 13, wherein the control means (30, 31) is arranged to adjust at least one of said parameters in an automatic manner.

15. A device according to any one of claims 13 and 14, wherein the determining means (31, 32) is arranged to determine said value in an automatic manner.

16. A device according to any one of claims 13 to 15, comprising storing means (33) arranged to store the value of said variable.

## Patentansprüche

1. Verfahren zur Durchführung einer ein Tier betreffenden Handlung an einem lebenden Tier, wobei die ein Tier betreffende Handlung durch eine Anzahl von einstellbaren Parametern, welche die Art der ein Tier betreffenden Handlung definieren, bestimmt ist, wobei die ein Tier betreffende Handlung Melken mittels einer Melkmaschine gemäß einem Melkvorgang ist, welcher durch eine Anzahl von einstellbaren Parametern, welche die Art des Melkvorgangs definieren, bestimmt ist, wobei die ein Tier betreffende Handlung Milch oder Milchfett oder Milchprotein oder Ähnliches erzielt, wobei das Verfahren die Schritte umfasst:
Bestimmen eines Wertes einer Variablen, welche in Beziehung zu einem oder mehreren Tieren steht, für das Tier;
Einstellen in Verbindung mit einer gerade anstehenden ein Tier betreffenden Handlung an dem Tier von einem der verfügbaren Parameter als Reaktion auf den bestimmten Wert; und
Durchführen der gerade anstehenden ein Tier betreffenden Handlung,
**dadurch gekennzeichnet, dass** die mit dem Tier in Bezug stehende Variable durch den Grad der Füllung des Euters des Tieres definiert ist.

2. Verfahren nach Anspruch 1,
wobei der Wert einer Variablen, welche in Bezug zu einem oder mehreren Tieren steht, von wenigstens einer ersten vorhergehenden ein Tier betreffenden Handlung für die gerade anstehende ein Tier betreffende Handlung bestimmt wird.

3. Verfahren nach einem der vorhergehenden Ansprüche,
wobei die Einstellung wenigstens eines der Parameter derart ist, dass die gerade anstehende ein Tier betreffende Handlung auf eine weniger intensive Art ausgeführt wird, wenn die das Tier betreffende Variable einen relativ kleinen Wert aufweist, und auf eine intensivere Art ausgeführt wird, wenn die das Tier betreffende Variable einen relativ großen Wert aufweist.

4. Verfahren nach einem der vorhergehenden Ansprüche,
wobei die Einstellung auf eine automatische Weise durchgeführt wird.

5. Verfahren nach einem der vorhergehenden Ansprüche,
wobei das Bestimmen des Wertes auf eine automatische Weise durchgeführt wird.

6. Verfahren nach Anspruch 3,
wobei die einstellbaren Parameter wenigstens einen aus der Gruppe Melkvakuumpegel, Pulsierfrequenz, Dauer und/oder Intensität der vorangehenden Zitzenstimulierung, Dauer und/oder Intensität der Zitzenreinigung, Pulsierverhältnis und Zeitpunkt der Abnahme der Zitzenbecher umfassen.

7. Verfahren nach Anspruch 6,
wobei die Einstellung des Melkvakuumpegels so gestaltet ist, dass der Melkvakuumpegel während der laufenden Melktätigkeit relativ niedrig ist, wenn die das Tier betreffende Variable einen relativ kleinen Wert aufweist, und relativ hoch ist, wenn die das Tier betreffende Variable einen relativ großen Wert aufweist.

8. Verfahren nach Anspruch 6,
wobei die Einstellung der Pulsierfrequenz so gestaltet ist, dass die Pulsierfrequenz während der laufenden Melktätigkeit relativ niedrig ist, wenn die das Tier betreffende Variable einen relativ kleinen Wert aufweist, und relativ hoch ist, wenn die das Tier betreffende Variable einen relativ großen Wert aufweist.

9. Verfahren nach Anspruch 6,
wobei die Einstellung der vorangehenden Zitzenstimulation so gestaltet ist, dass die vorangehende Zitzenstimulation während der laufenden Melktätigkeit relativ lang dauert, wenn die das Tier betreffende Variable einen relativ kleinen Wert aufweist, und relativ kurz dauert, wenn die das Tier betreffende Variable einen relativ großen Wert aufweist.

10. Verfahren nach Anspruch 6,
wobei die Einstellung des Pulsierverhältnisses so gestaltet ist, dass das Pulsierverhältnis während der laufenden Melktätigkeit relativ niedrig ist, wenn die das Tier betreffende Variable einen relativ kleinen Wert aufweist, und relativ hoch ist, wenn die das Tier betreffende Variable einen relativ großen Wert aufweist.

11. Verfahren nach Anspruch 6,
wobei die Einstellung der Zeitspanne für die Abnahme der Zitzenbecher so gestaltet ist, dass die Zitzenbecher zu einem relativ frühen Zeitpunkt abgenommen werden, wenn die das Tier betreffende Variable einen relativ kleinen Wert aufweist, und zu einem relativ späten Zeitpunkt abgenommen werden, wenn die das Tier betreffende Variable einen relativ großen Wert aufweist.

12. Verfahren nach einem der vorhergehenden Ansprüche,
wobei die erste vorhergehende ein Tier betreffende Handlung die ein Tier betreffende Handlung unmittelbar vor der laufenden ein Tier betreffenden Handlung ist.

13. Vorrichtung zum Ausführen einer ein Tier betreffenden Handlung an einem lebenden Tier, umfassend:
eine Maschine, welche ausgestaltet ist, um die ein Tier betreffende Handlung am Tier gemäß einem Vorgang auszuführen, der durch eine Anzahl von einstellbaren Parametern, welche die Art des Vorgangs definieren, bestimmt wird, wobei die Maschine zum Ausführen einer ein Tier betreffenden Handlung eine Melkmaschine zum Melken eines Tieres ist, umfassend:
eine Melkmaschine, welche so ausgestaltet ist, um das Melken des Tieres gemäß einem Melkvorgang zu ermöglichen, der durch eine Anzahl von einstellbaren Parametern, welche die Art des Melkvorgangs definieren, bestimmt wird, wobei die Vorrichtung umfasst:
Bestimmungsmittel (31, 32, 34) zum Bestimmen eines Wertes einer Variablen, welche in Bezug auf ein oder mehrere Tiere steht, für dieses Tier und
Steuerungseinrichtungen (30, 31), welche so ausgelegt sind, um wenigstens einen der Parameter der Maschine in Verbindung mit einer gerade anstehenden ein Tier betreffenden Handlung als Reaktion auf den bestimmten Wert einzustellen, **dadurch gekennzeichnet, dass** die Bestimmungsmittel (31, 32, 34) zum Bestimmen des Grads der Füllung des Euters des Tieres ausgelegt sind.

14. Vorrichtung nach Anspruch 13,
wobei die Steuerungseinrichtungen (30, 31) so ausgelegt sind, um wenigstens einen der Parameter auf automatische Weise einzustellen.

15. Vorrichtung nach einem der Ansprüche 13 und 14,
wobei die Bestimmungsmittel (31, 32) so ausgelegt sind, um den Wert auf eine automatische Weise zu bestimmen.

16. Vorrichtung nach einem der Ansprüche 13 bis 15,
umfassend einen Speichermittel (33), der so ausgelegt ist, um den Wert der Variablen zu speichern.

## Revendications

1. Procédé de réalisation d'une action liée à un animal sur un animal vivant, ladite action liée à un animal étant déterminée par un certain nombre de paramètres réglables définissant la nature de l'action liée à un animal, dans lequel l'action liée à un animal est la traite au moyen d'une machine de traite selon un procédé de traite déterminé par un certain nombre de paramètres réglables définissant la nature du procédé de traite, dans lequel l'action liée à un animal donne du lait ou de la matière grasse de lait ou des protéines de lait ou similaires, le procédé comprenant les étapes suivantes :
détermination pour ledit animal d'une valeur d'une variable liée à un ou plusieurs animaux ;
réglage en rapport avec une action liée à un animal en cours sur ledit animal d'au moins un desdits paramètres en réponse à ladite valeur déterminée ; et
réalisation de l'action liée à un animal en cours, **caractérisé en ce que** la variable liée à un animal est définie par le degré de remplissage du pis dudit animal.

2. Procédé selon la revendication 1, dans lequel la valeur d'une variable liée à un ou plusieurs animaux est déterminée à partir d'au moins une première action liée à un animal précédente jusqu'à l'action liée à un animal en cours.

3. Procédé selon l'une quelconque des revendications précédentes, dans lequel le réglage d'au moins un desdits paramètres est tel que l'action liée à un animal en cours est réalisée de manière moins intensive lorsque la variable liée à un animal présente une valeur relativement petite et de manière plus intensive lorsque la variable liée à un animal présente une valeur relativement grande.

4. Procédé selon l'une quelconque des revendications précédentes, dans lequel le réglage est réalisé de manière automatique.

5. Procédé selon l'une quelconque des revendications précédentes, dans lequel la détermination de ladite valeur est réalisée de manière automatique.

6. Procédé selon la revendication 3, dans lequel lesdits paramètres réglables incluent au moins un élément parmi le niveau de vide de traite, la fréquence de pulsation, la durée et/ou l'intensité de la stimulation de trayons précédente, la durée et/ou l'intensité du nettoyage de trayon, le rapport de pulsation, et le point temporel du retrait des gobelets-trayeurs.

7. Procédé selon la revendication 6, dans lequel le réglage du niveau de vide de traite est tel que le niveau de vide de traite pendant l'opération de traite en cours est relativement bas lorsque la variable liée à un animal présente une valeur petite relative et relativement élevé lorsque la variable liée à un animal présente une valeur grande relative.

8. Procédé selon la revendication 6, dans lequel le réglage de la fréquence de pulsation est tel que la fréquence de pulsation pendant l'opération de traite en cours est relativement basse lorsque la variable liée à un animal présente une valeur petite relative et relativement élevée lorsque la variable liée à un animal présente une valeur relativement grande.

9. Procédé selon la revendication 6, dans lequel le réglage de la stimulation de trayons précédente est tel que la période de stimulation pendant l'opération de traite en cours est relativement longue lorsque la variable liée à un animal présente une valeur petite relative et relativement courte lorsque la variable liée à un animal présente une valeur grande relative.

10. Procédé selon la revendication 6, dans lequel le réglage du rapport de pulsation est tel que le rapport de pulsation pendant l'opération de traite en cours est relativement bas lorsque la variable liée à un animal présente une valeur petite relative et relativement élevé lorsque la variable liée à un animal présente une valeur relativement grande.

11. Procédé selon la revendication 6, dans lequel le réglage de la période temporelle de retrait des gobelets-trayeurs est tel que les gobelets-trayeurs sont retirés à un point relativement précoce dans le temps lorsque la variable liée à un animal présente une valeur petite relative et à un point relativement tardif dans le temps lorsque la variable liée à un animal présente une valeur grande relative.

12. Procédé selon l'une quelconque des revendications précédentes, dans lequel la première action liée à un animal précédente est l'action liée à un animal précédant immédiatement l'action liée à un animal en cours.

13. Dispositif de réalisation d'une action liée à un animal sur un animal vivant, comprenant :
une machine agencée pour réaliser l'action liée à un animal sur ledit animal selon un procédé déterminé par un certain nombre de paramètres réglables définissant la nature du procédé, dans lequel la machine pour réaliser une action liée à un animal est une machine de traite pour traire un animal, comprenant :
une machine de traite agencée pour permettre la traite de l'animal selon un procédé de traite déterminé par un certain nombre de paramètres réglables définissant la nature du procédé de traite, ledit dispositif comprenant :
des moyens de détermination (31, 32, 34) pour déterminer pour ledit animal une valeur d'une variable liée à un ou plusieurs animaux, et
des moyens de commande (30, 31) agencé pour régler au moins un desdits paramètres de la machine en rapport avec une action liée à un animal en cours en réponse à ladite valeur déterminée, **caractérisé en ce que** les moyens de détermination (31, 32, 34) sont adaptés pour déterminer le degré de remplissage du pis dudit animal.

14. Dispositif selon la revendication 13, dans lequel les moyens de commande (30, 31) sont agencés pour régler au moins un desdits paramètres de manière automatique.

15. Dispositif selon l'une quelconque des revendications 13 et 14, dans lequel les moyens de détermination (31, 32) sont agencés pour déterminer ladite valeur de manière automatique.

16. Dispositif selon l'une quelconque des revendications 13 à 15, comprenant des moyens de stockage (33) agencés pour stocker la valeur de ladite variable.
